# EUROPEAN PATENT APPLICATION

(11) **EP 3 888 876 A1**
(43) Date of publication of application: **06.10.2021**
(21) Application number: 21163776.4
(22) Date of filing: 19.03.2021
(51) Int. Cl.: B29C 45/76

(54) **INJECTION MOLDING MACHINE AND INDUSTRIAL MACHINE**

(30) Priority: 31.03.2020 JP 2020062579
(71) Applicant: Sumitomo Heavy Industries, Ltd., Tokyo 141-6025 (JP)
(72) Inventor: YOTSUYANAGI, Chimaki, Chiba-shi, Chiba, 263-0001 (JP); TANIDA, Kazuki, Chiba-shi, Chiba, 263-0001 (JP)
(74) Representative: Louis Pöhlau Lohrentz

(57) **Abstract**

An injection molding machine (10) includes a display unit (760) that displays an optimized screen (60, 70) on which a plurality of separately displayable screen elements are collected. For example, the display unit (760) of the injection molding machine (10) may display the optimized screen (60, 70) on which the plurality of screen elements included in each of standard screens (for example, an injection setting screen (40) and a state monitoring screen (50)) prepared in an initial state are collected.

## Description

### BACKGROUND OF THE INVENTION

### Field of the Invention

The present disclosure relates to an injection molding machine.

### Description of Related Art

In the related art, in some cases, an industrial machine such as an injection molding machine is provided with a display unit that displays information relating to a host device (industrial machine) (for example, refer to Japanese Patent No. 6049874) .

### SUMMARY OF THE INVENTION

However, in order to confirm specific information or set (change) changeable information, a user usually operates display contents of a display unit, and selectively displays a screen for displaying required information. In this way, the user needs to search for and display the required information by himself or herself. Therefore, there is room for improvement from a viewpoint of user convenience.

Therefore, in view of the above-described problem, an object of the present invention is to provide a technique that can improve convenience of the user who uses the display unit of an industrial machine such as an injection molding machine.

According to an embodiment of the present disclosure, in order to achieve the above-described object, there is provided an injection molding machine including a display unit for displaying an editing screen on which a plurality of components that can be separately displayed are collected.

In addition, according to another embodiment of the present disclosure, there is provided an industrial machine including a display unit for displaying an editing screen on which a plurality of components that can be separately displayed are collected.

According to the above-described embodiments, it is possible to provide a technique capable of improving convenience of a user who uses the display unit of the industrial machine such as the injection molding machine.

### BRIEF DESCRIPTION OF THE DRAWINGS

FIG. 1 is a view illustrating an example of an injection molding machine.
FIG. 2 is a view illustrating an example of the injection molding machine.
FIG. 3 is a functional block diagram illustrating an example of a configuration of a control unit.
FIG. 4 is a view illustrating an example of a standard screen displayed on a display unit.
FIG. 5 is a view illustrating another example of the standard screen displayed on the display unit.
FIG. 6 is a view illustrating an example of an optimized screen displayed on the display unit.
FIG. 7 is a view illustrating another example of the optimized screen displayed on the display unit.

### DETAILED DESCRIPTION OF THE INVENTION

Hereinafter, an embodiment of the present invention will be described with reference to the drawings.

### [Configuration of Injection Molding Machine]

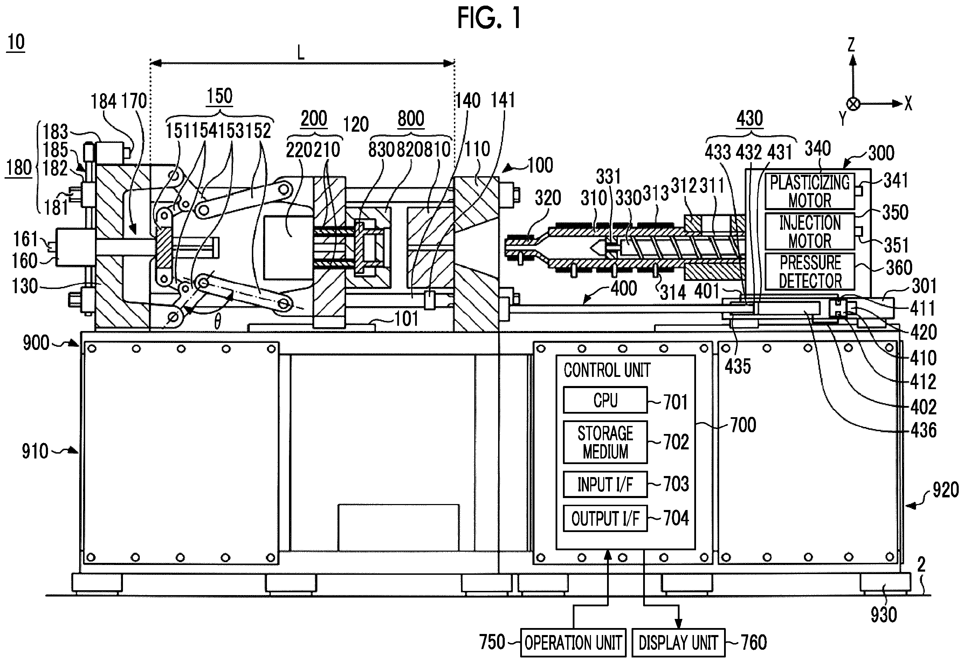

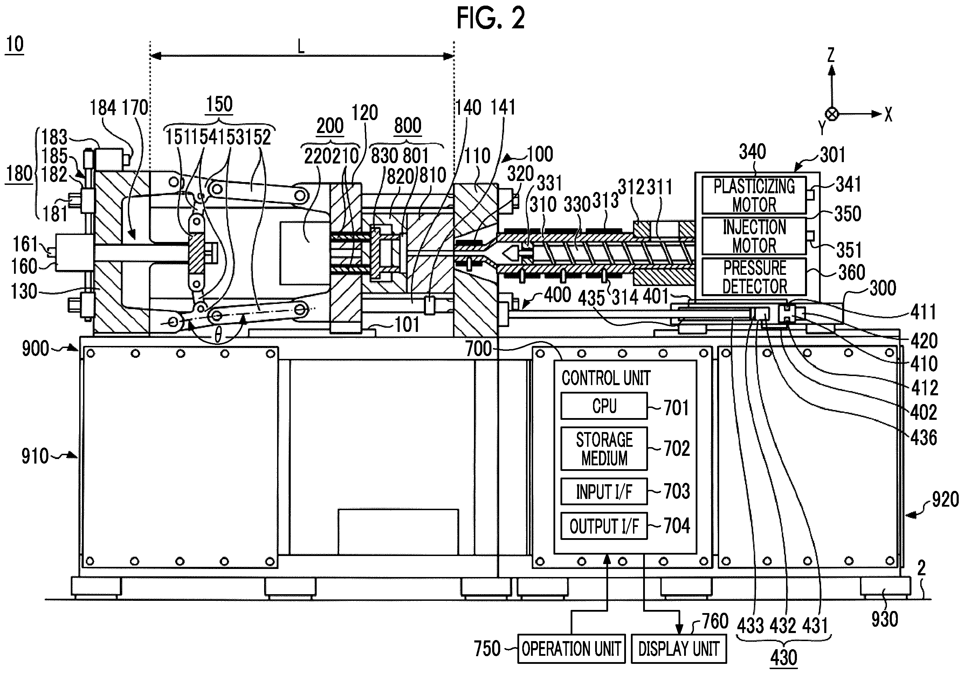

FIGS. 1 and 2 are views illustrating an example of an injection molding machine 10 according to the present embodiment. Specifically, FIG. 1 is a view illustrating a state when the injection molding machine 10 completes mold opening, and FIG. 2 is a view illustrating a state when the injection molding machine 10 performs mold clamping. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of the injection molding machine 10. A negative side in the Y-axial direction will be referred to as an operation side, and a positive side in the Y-axial direction will be referred to an anti-operation side.

As illustrated in FIGS. 1 and 2, injection molding machine 10 (an example of an industrial machine) has the mold clamping unit 100 that opens and closes a mold unit 800, an ejector unit 200 that ejects a molding product molded by the mold unit 800, an injection unit 300 that injects a molding material into the mold unit 800, a moving unit 400 that advanced and retreated the injection unit 300 with respect to the mold unit 800, and a control unit 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the injection unit 300. The mold clamping unit frame 910 and the injection unit frame 920 are respectively installed on a floor 2 via a leveling adjuster 930. The control unit 700 is disposed in an internal space of the injection unit frame 920. Hereinafter, each component of the injection molding machine 10 will be described.

### Mold Clamping Unit

In describing the mold clamping unit 100, a moving direction of a movable platen 120 during mold closing (for example, a positive direction of an X-axis) will be defined as forward, and a moving direction of the movable platen 120 during mold opening (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary mold 810 and a movable mold 820.

For example, the mold clamping unit 100 is a horizontal type, and a mold opening and closing direction is a horizontal direction. The mold clamping unit 100 has a stationary platen 110, a movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a facing surface of the stationary platen 110 which faces the movable platen 120.

The movable platen 120 is disposed to be movable with respect to the mold clamping unit frame 910 in the mold opening and closing direction. A guide 101 that guides the movable platen 120 is laid on the mold clamping unit frame 910. The movable mold 820 is attached to a facing surface of the movable platen 120 which faces the stationary platen 110. Since the movable platen 120 is advanced and retreated with respect to the stationary platen 110, the mold closing, the pressurizing, the mold clamping, the depressurizing, and the mold opening of the mold unit 800 are performed.

The toggle support 130 is disposed at an interval from the stationary platen 110, and is mounted on the mold clamping unit frame 910 to be movable in the mold opening and closing direction. In addition, the toggle support 130 may be disposed along a guide laid on the mold clamping unit frame 910. The guide of the toggle support 130 may be the same as the guide 101 of the movable platen 120.

In the present embodiment, the stationary platen 110 is fixed to the mold clamping unit frame 910, and the toggle support 130 is disposed to be movable with respect to the mold clamping unit frame 910 in the mold opening and closing direction. However, the toggle support 130 may be fixed to the mold clamping unit frame 910, and the stationary platen 110 may be disposed to be movable with respect to the mold clamping unit frame 910 in the mold opening and closing direction.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control unit 700. The detection result of the tie bar strain detector 141 is used in detecting the mold clamping force.

In the present embodiment, as a mold clamping force detector for measuring the mold clamping force, the tie bar strain detector 141 is used. However, the present invention is not limited thereto. The mold clamping force detector is not limited to a strain gauge type, and may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 with respect to the toggle support 130 in the mold opening and closing direction. The toggle mechanism 150 is configured to include a crosshead 151 and a pair of link groups. Each of the pair of link groups has a first link 152 and a second link 153 which are connected to be freely bent and stretched by a pin. The first link 152 is attached to the movable platen 120 to freely oscillate by a pin. The second link 153 is attached to the toggle support 130 to freely oscillate by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to a configurations illustrated in FIGS. 1 and 2. For example, in FIGS. 1 and 2, the number of nodes in each link group is five, but may be four. One end portion of the third link 154 is coupled to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotational motion of the mold clamping motor 160 into a linear motion of the crosshead 151. The motion conversion mechanism 170 includes a screw shaft and a screw nut screwed to the screw shaft. A ball or roller may be interposed between the screw shaft and the screw nut.

The mold clamping unit 100 performs a mold closing process, a pressurizing process, a mold clamping process, a depressurizing process, and a mold opening process under control of the control unit 700.

In the mold closing process, the mold clamping motor 160 is driven to advance the movable platen 120 by advancing the crosshead 151 to a mold closing completion position at a set movement speed. In this manner, the movable mold 820 is caused to touch the stationary mold 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control unit 700.

A crosshead position detector for detecting a position of the crosshead 151 and a crosshead movement speed detector for measuring a movement speed of the crosshead 151 are not limited to the mold clamping motor encoder 161, and a general detector can be used. In addition, a movable platen position detector for detecting a position of the movable platen 120 and a movable platen movement speed detector for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at a mold clamping position. In the mold clamping process, the mold clamping force generated in the pressurizing process is maintained. In the mold clamping process, a cavity space 801 (refer to FIG. 2) is formed between the movable mold 820 and the stationary mold 810, and the injection unit 300 fills the cavity space 801 with a liquid molding material. A molding product is obtained by solidifying the molding material filled therein.

The number of the cavity spaces 801 may be one or more. In the latter case, a plurality of molding products can be obtained at the same time. An insert material may be disposed in a portion of the cavity space 801, and the other portion of the cavity space 801 may be filled with the molding material. A molding product in which the insert material and the molding material are integrated with each other can be obtained.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position the movable platen 120 at a set movement speed. In this manner, the movable platen 120 is retreated so that the movable mold 820 is separated from the stationary mold 810. Thereafter, the ejector unit 200 ejects the molding product from the movable mold 820.

Setting conditions in the mold closing process, the pressurizing process, and the mold clamping process are collectively set as a series of setting conditions. For example, the movement speed or positions of the crosshead 151 (including a mold closing start position, a movement speed switching position, a mold closing completion position, and a mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner . For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the positions of the movable platen 120 may be set. In addition, instead of the position (for example, the mold clamping position) or the position of the movable platen of the crosshead, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed by the first link 152 and the second link 153. The link angle θ is obtained from the position of the crosshead 151. When the link angle θ is 180°, the toggle magnification is maximized.

When a thickness of the mold unit 800 is changed due to replacement or mold unit 800 or a temperature change in the mold unit 800, a mold space is adjusted so that a predetermined mold clamping force is obtained during the mold clamping. For example, in the mold space adjustment, an interval L between the stationary platen 110 and the toggle support 130 is adjusted so that the link angle θ of the toggle mechanism 150 becomes a predetermined angle when the movable mold 820 touches the stationary mold 810.

The mold clamping unit 100 has a mold space adjustment mechanism 180. The mold space adjustment mechanism 180 adjusts a mold space by adjusting the interval L between the stationary platen 110 and the toggle support 130. For example, a timing for adjusting the mold space is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each tie bar 140. A rotational driving force of the mold space adjustment motor 183 may be transmitted to a plurality of the screw nuts 182 via a rotational driving force transmitting unit 185. The plurality of screw nuts 182 can be rotated in synchronization with each other. In addition, the plurality of screw nuts 182 can be individually rotated by changing a transmission path of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of the driven gears and an intermediate gear meshing with the driving gear are held to be rotatable in a central portion of the toggle support 130. In addition, the rotational driving force transmitting unit 185 may be configured to include a belt or a pulley instead of the gear.

An operation of the mold space adjustment mechanism 180 is controlled by the control unit 700. The control unit 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination with each other.

The interval L is detected by using a mold space adjustment motor encoder 184. The mold space adjustment motor encoder 184 detects a rotation amount or a rotation direction of the mold space adjustment motor 183, and transmits a signal indicating a detection result thereof to the control unit 700. The detection result of the mold space adjustment motor encoder 184 is used in monitoring or controlling the position or the interval L of the toggle support 130. In addition, a toggle support position detector for detecting the position of the toggle support 130 and an interval detector for detecting the interval L are not limited to the mold space adjustment motor encoder 184, and a general detector can be used.

The mold clamping unit 100 of the present embodiment is a horizontal type in which the mold opening and closing direction is a horizontal direction, but may be a vertical type in which the mold opening and closing direction is a vertical direction.

In addition, the mold clamping unit 100 of the present embodiment has the mold clamping motor 160 as a drive source. However, a hydraulic cylinder may be provided instead of the mold clamping motor 160. In addition, the mold clamping unit 100 may have a linear motor for mold opening and closing, and may have an electromagnet for mold clamping.

### Ejector Unit

In describing the ejector unit 200, similarly to the description of the mold clamping unit 100, a moving direction of the movable platen 120 during the mold closing (for example, the positive direction of the X-axis) will be defined as forward, and a moving direction of the movable platen 120 during the mold opening (for example, the negative direction of the X-axis) will be defined as rearward.

The ejector unit 200 (example of a pressurizing device) is attached to the movable platen 120, and is advanced and retreated together with the movable platen 120. The ejector unit 200 has an ejector rod 210 that ejects a molding product from the mold unit 800, and a drive mechanism 220 that moves the ejector rod 210 in the moving direction (X-axial direction) of the movable platen 120.

The ejector rod 210 is disposed to be freely advanced and retreated in a through-hole of the movable platen 120. A front end portion of the ejector rod 210 comes into contact with a movable member 830 disposed to be freely advanced and retreated inside the movable mold 820. The front end portion of the ejector rod 210 may be connected to or may not be connected to the movable member 830.

For example, the drive mechanism 220 has an ejector motor and a motion conversion mechanism that converts a rotational motion of the ejector motor into a linear motion of the ejector rod 210. The motion conversion mechanism includes a screw shaft and a screw nut screwed to the screw shaft. A ball or roller may be interposed between the screw shaft and the screw nut.

The ejector unit 200 performs an ejection process under the control of the control unit 700. In the ejection process, the ejector rod 210 is advanced from a standby position to an ejection position at a set movement speed. In this manner, the movable member 830 is advanced to eject the molding product. Thereafter, the ejector motor is driven to retreat the ejector rod 210 at a set movement speed, and the movable member 830 is retreated to an original standby position.

For example, a position or a movement speed of the ejector rod 210 is detected by using an ejector motor encoder. The ejector motor encoder detects the rotation of the ejector motor, and transmits a signal indicating a detection result thereof to the control unit 700. In addition, an ejector rod position detector for detecting the position of the ejector rod 210, and an ejector rod movement speed detector for measuring the movement speed of the ejector rod 210 are not limited to the ejector motor encoder, and a general detector can be used.

### Injection Unit

In describing the injection unit 300, unlike the description of the mold clamping unit 100 or the description of the ejector unit 200, a moving direction of the screw 330 during filling (for example, the negative direction of the X-axis) will be defined as forward, and a moving direction of the screw 330 during plasticizing (for example, the positive direction of the X-axis) will be defined as rearward.

The injection unit 300 is disposed in a slide base 301, and the slide base 301 is disposed to be advanced and retreated with respect to the injection unit frame 920. The injection unit 300 is disposed as to be freely advanced and retreated with respect to the mold unit 800. The injection unit 300 touches the mold unit 800, and fills a molding material into the cavity space 801 inside the mold unit 800. For example, the injection unit 300 has a cylinder 310, a nozzle 320, a screw 330, a plasticizing motor 340, an injection motor 350, and a pressure detector 360.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The cylinder 310 is divided into a plurality of zones in the axial direction (for example, the X-axial direction) of the cylinder 310. The heating unit 313 and the temperature measurer 314 are provided in each of the plurality of zones. The control unit 700 controls the heating unit 313 so that a set temperature is set in each of the plurality of zones and a measured temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control unit 700 controls the heating unit 313 so that the measured temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is ejected from the nozzle 320, and fills the inside of the mold unit 800.

As a backflow prevention valve to prevent a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the molding material accumulated in the front of the screw 330 is prevented from flowing rearward.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The injection unit 300 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotational motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The pressure detector 360 detects a force transmitted between the injection motor 350 and the screw 330. The detected force is converted into the pressure by the control unit 700. The pressure detector 360 is provided in a force transmission path between the injection motor 350 and the screw 330, and detects the force acting on the pressure detector 360.

The pressure detector 360 transmits a signal indicating a detection result thereof to the control unit 700. The detection result of the pressure detector 360 is used in controlling or monitoring the pressure received by the screw 330 from the molding material, a back pressure acting on the screw 330, or the pressure acting on the molding material from the screw 330.

The injection unit 300 performs a plasticizing process, a filling process, and a holding pressure process under the control of the control unit 700. The filling process and the holding pressure process may be collectively referred to as an injection process.

In the plasticizing process, the plasticizing motor 340 is driven to rotate the screw 330 at a set rotation speed, and the molding material is fed forward along the helical groove of the screw 330. Through the process, the molding material is gradually melted. As the liquid molding material is fed forward of the screw 330 and is accumulated in a front portion of the cylinder 310, the screw 330 is retreated. For example, a rotation speed of the screw 330 is measured by using a plasticizing motor encoder 341. The plasticizing motor encoder 341 detects the rotation of the plasticizing motor 340, and transmits a signal indicating a detection result thereof to the control unit 700. In addition, a screw rotation speed detector for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the pressure detector 360, for example. The pressure detector 360 transmits a signal indicating a detection result thereof to the control unit 700. When the screw 330 is retreated to a plasticizing completion position and a predetermined amount of the molding material is accumulated in front of the screw 330, the plasticizing process is completed.

The position and the rotation speed of the screw 330 in the plasticizing process are collectively set as a series of setting conditions. For example, a plasticizing start position, a rotating speed switching position, and a plasticizing completion position are set. The positions are aligned in this order from the front side toward the rear side, and represent the start point and the end point of the section in which the rotation speed is set. The rotation speed is set for each section. The number of the rotating speed switching positions may be one or more. The rotating speed switching position may not be set. In addition, the back pressure is set for each section.

In the filling process, the injection motor 350 is driven to advance the screw 330 at a set movement speed, and the liquid molding material accumulated in front of the screw 330 fills the cavity space 801 inside the mold unit 800. The position or the movement speed of the screw 330 is detected by using an injection motor encoder 351, for example. The injection motor encoder 351 detects the rotation of the injection motor 350, and transmits a signal indicating a detection result thereof to the control unit 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the pressure detector 360. When a measurement value of the pressure detector 360 is equal to or smaller than a setting pressure, the screw 330 is advanced at a set movement speed. On the other hand, when the measurement value of the pressure detector 360 exceeds the setting pressure, in order to protect the mold, the screw 330 is advanced at the movement speed slower than the set movement speed so that the measurement value of the pressure detector 360 is equal to or smaller than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is maintained at a set pressure, and the molding material remaining inside the cylinder 310 is pressed toward the mold unit 800. The molding material which is insufficient due to cooling shrinkage inside the mold unit 800 can be replenished. The holding pressure is measured by using the pressure detector 360, for example. The pressure detector 360 transmits a signal indicating a detection result thereof to the control unit 700. A set value of the holding pressure may be changed depending on an elapsed time from the start of the holding pressure process . The holding pressure and a holding time for holding the holding pressure in the holding pressure process may be respectively set, or may be collectively set as a series of setting conditions.

In the holding pressure process, the molding material in the cavity space 801 inside the mold unit 800 is gradually cooled, and when the holding pressure process is completed, an entrance of the cavity space 801 is closed by the solidified molding material. This state is referred to as gate seal, and prevents the backflow of the molding material from the cavity space 801. After the holding pressure process, a cooling process starts. In the cooling process, the molding material inside the cavity space 801 is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the injection unit 300 of the present embodiment is a horizontal type in which the axial direction of the cylinder 310 is a horizontal direction, but may be a vertical type in which the axial direction of the cylinder 310 is a vertical direction. The mold clamping unit combined with the injection unit 300 of the vertical type may be the vertical type or the horizontal type. Similarly, the mold clamping unit combined with the injection unit 300 of the horizontal type may be the horizontal type or the vertical type.

### Moving Unit

In describing the moving unit 400, similarly to the description of the injection unit 300, a moving direction of the screw 330 during the filling (for example, the negative direction of the X-axis) will be defined as forward, and a moving direction of the screw 330 during the plasticizing (for example, the positive direction of the X-axis) will be defined as rearward.

The moving unit 400 advances and retreats the injection unit 300 with respect to the mold unit 800. The moving unit 400 presses the nozzle 320 against the mold unit 800, thereby generating a nozzle touch pressure. The moving unit 400 includes a hydraulic pump 410, a motor 420 serving as a drive source, and a hydraulic cylinder 430 serving as a hydraulic actuator.

The hydraulic pump 410 has a first port 411 and a second port 412. The hydraulic pump 410 is a pump that can rotate in both directions, and switches the rotation direction of the motor 420. In this manner, a hydraulic fluid (for example, oil) is sucked from any one of the first port 411 and the second port 412, and is discharged from the other to generate a hydraulic pressure. In addition, the hydraulic pump 410 can suck the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control unit 700. The motor 420 may be an electric motor, or may be an electric servo motor.

The hydraulic cylinder 430 has a cylinder body 431, a piston 432, and a piston rod 433. The cylinder body 431 is fixed to the injection unit 300. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401. In this manner, the injection unit 300 is pressed forward. The injection unit 300 is advanced, and the nozzle 320 is pressed against the stationary mold 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402. In this manner, the injection unit 300 is pressed rearward. The injection unit 300 is retreated, and the nozzle 320 is separated from the stationary mold 810.

In the present embodiment, the moving unit 400 includes the hydraulic cylinder 430, but the present invention is not limited thereto. For example, instead of the hydraulic cylinder 430, an electric motor and a motion conversion mechanism that converts a rotational motion of the electric motor into a linear motion of the injection unit 300 may be used.

### Control Unit

For example, the control unit 700 is configured to include a computer, and has a central processing unit (CPU) 701, a storage medium 702 such as a memory, an input interface 703, and an output interface 704 as illustrated in FIGS. 1 and 2. The control unit 700 performs various controls by causing the CPU 701 to execute a program stored in the storage medium 702. In addition, the control unit 700 receives a signal from the outside through the input interface 703, and transmits the signal to the outside through the output interface 704.

The control unit 700 repeatedly performs the plasticizing process, the mold closing process, the pressurizing process, the mold clamping process, the filling process, the holding pressure process, the cooling process, the depressurizing process, the mold opening process, and the ejection process, thereby repeatedly manufacturing the molding product. A series of operations for obtaining the molding product, for example, an operation from the start of a plasticizing process to the start of the subsequent plasticizing process will be referred to as a "shot" or a "molding cycle" . In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, and the ejection process are performed in this order. The order described here is the order of the start times of the respective processes. The filling process, the holding pressure process, and the cooling process are performed during the mold clamping process. The start of the mold clamping process may coincide with the start of the filling process. The completion of the depressurizing process coincides with the start of the mold opening process.

A plurality of processes may be simultaneously performed in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. Even when the mold opening process starts during the plasticizing process, when the on-off valve closes the flow path of the nozzle 320, the molding material from does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, and the ejection process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and it is possible to prevent a leakage of molding material from the nozzle 320 before the filling process starts.

The control unit 700 is connected to an operation unit 750 that receives an input operation of a user, and a display unit 760 that displays a display screen. For example, the operation unit 750 and the display unit 760 may be configured to include a touch panel, and may be integrated with each other. The touch panel serving as the display unit 760 displays the display screen under the control of the control unit 700. For example, the display screen of the touch panel may display settings of the injection molding machine 10, and information on a current state of the injection molding machine 10. In addition, for example, the display screen of the touch panel may display a button for receiving the input operation of the user or an input operation unit such as an input field. The touch panel serving as the operation unit 750 detects an input operation of the user on the display screen, and outputs a signal corresponding to the input operation to the control unit 700. In this manner, for example, while confirming information displayed on the display screen, the user can perform settings (including an input of a set value) of the injection molding machine 10 by operating the input operation unit provided on the display screen. In addition, the user can operate the injection molding machine 10 corresponding to the input operation unit by operating the input operation unit provided on the display screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the display screens displayed on the touch panel serving as the display unit 760. The operation unit 750 and the display unit 760 are disposed on the operation side (negative direction of the Y-axis) of the mold clamping unit 100 (more specifically, the stationary platen 110).

A case has been described in which the operation unit 750 and the display unit 760 of the present embodiment are integrated with each other as the touch panel. However, both of these may be independently provided. In addition, a plurality of the operation units 750 may be provided. In addition, instead of or in addition to the operation unit 750, another input unit (for example, a voice input unit that receives a voice input or a gesture input unit that receives a gesture input) that receives an input other than the operation input from the user may be provided.

### Details of Control Unit

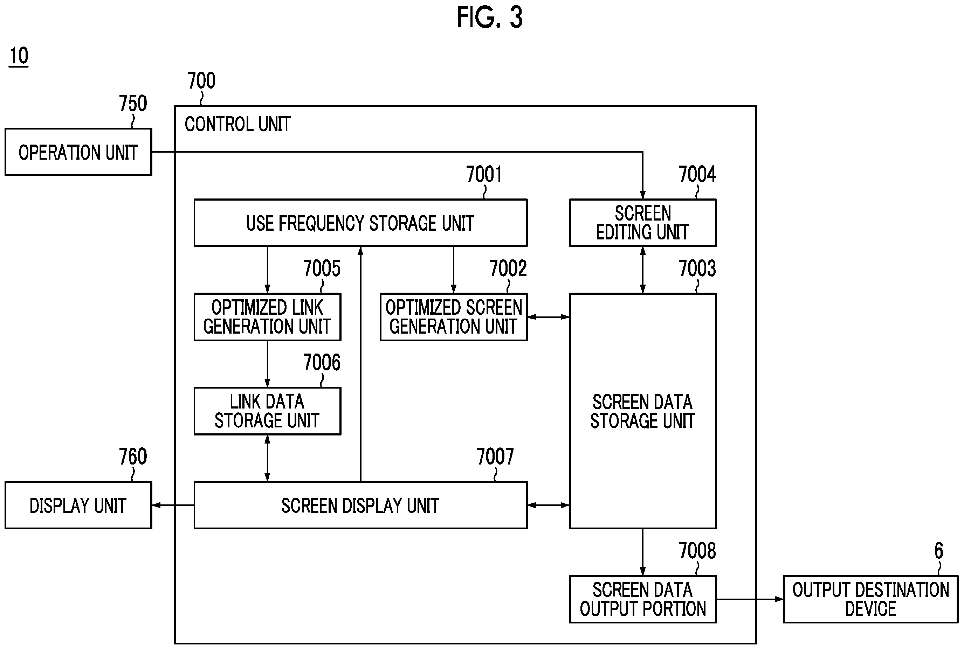

Next, details of the control unit 700 will be described with reference to FIG. 3.

FIG. 3 is a functional block diagram illustrating an example of a configuration of the control unit 700.

The control unit 700 includes a use frequency storage unit 7001, an optimized screen generation unit 7002, a screen data storage unit 7003, a screen editing unit 7004, an optimized link generation unit 7005, a link data storage unit 7006, a screen display unit 7007, and a data output portion 7008. For example, a function of the use frequency storage unit 7001 may be realized by causing the CPU 701 to execute a predetermined program installed in a predetermined storage area defined in the storage medium 702 (for example, an auxiliary storage device) or the storage medium 702. The same may apply to function of the screen data storage unit 7003 and the link data storage unit 7006. In addition, the function of the optimized screen generation unit 7002 may be realized by causing the CPU 701 to execute a predetermined program installed in the storage medium 702. The same may apply to function of the screen editing unit 7004, the optimized link generation unit 7005, the screen display unit 7007, and the data output portion 7008.

The use frequency storage unit 7001 stores data relating to a use frequency of the user for each predetermined display unit that can be displayed on the display unit 760 (hereinafter, "use frequency data"). In accordance with a change in display contents of the display unit 760 (for example, switching between various screens or screen elements displayed on the display unit 760), the use frequency storage unit 7001 updates the use frequency data of the use frequency storage unit 7001 (for example, adding new record data as will be described later). For example, the predetermined display unit may be the display screen that displays one component (hereinafter, a "screen element") indicating one piece of information on the display unit 760, or that integrally displays a plurality of screen elements indicating mutually different pieces of information. In addition, for example, the predetermined display unit may be the screen element included in the display screen. For example, the use frequency data may be a set of record data generated for every one use (display) of the display unit, and a use frequency database using a set of accumulated record data may be constructed in the use frequency storage unit 7001.

For example, the use frequency may indicate the number of times of displaying on the display unit 760. For example, the number of times of displaying may indicate the number of times of continuously displaying on the display unit 760 for a certain period of time or longer. For example, in some cases, the user may display mistakenly display screens different from a desired display screen, and may immediately switch one display screen to the other display screen, or in some cases, the user may display the desired screen while switching between the display screens multiple times. In addition, for example, when a target of the user is the display unit (for example, a setting screen) for the user to perform settings by using the operation unit 750, the use frequency may indicate the number of times (for example, the number of settings) of performing a predetermined setting through the display unit. For example, the number of settings may indicate the number of times of performing a series of settings through a predetermined display unit. For example, the series of settings indicates a setting performed by continuous (consecutive) operations on a predetermined display unit through the operation unit 750. For example, when a setting operation is performed on the predetermined display unit through the operation unit 750, and the setting operation is performed on the predetermined display unit after a relatively short time interval (for example, several seconds to less than several tens of seconds), the operations may be determined as operations for a series of integral settings. In this case, the number of settings associated with the operations may be counted as once. On the other hand, when the setting operation is performed on the predetermined display unit through the operation unit 750, and the setting operation is performed on the predetermined display unit after a relatively long interval, the operation may be determined as the operation relating to another setting. In this case, the number of settings associated with the operations may be counted as twice.

In addition, for example, the use frequency storage unit 7001 may store use frequency data (record data) in a mode in which use frequency data satisfying a predetermined condition can be extracted from all of the use frequency data. For example, the use frequency data (record data) indicating the use of one display unit includes the identification information of the used (displayed) display unit. In this manner, the control unit 700 can determine which display unit is used, based on the identification information for each display unit defined in advance. In addition, the use frequency data may include identification information on the user in use, in addition to the identification information on the display unit which is used. For example, the identification information on the user is a user identifier (ID) uniquely defined for each of a plurality of users registered in advance. In this manner, the control unit 700 can determine which of the plurality of users registered in advance currently uses the injection molding machine 10 (display unit 760). Therefore, the control unit 700 can extract the use frequency data when a specific user uses the injection molding machine 10 from all of the use frequency data, and can determine the use frequency for each predetermined display unit used by the specific user. In addition, in addition to the identification information of the display unit which is used, the use frequency data may include information indicating the presence or absence of an abnormality in the injection molding machine 10 or identification information on the abnormality occurring when the abnormality occurs. In this manner, the control unit 700 can determine whether or not the abnormality occurs, or can determine which abnormality of the plurality of abnormalities occurs. Therefore, the control unit 700 can extract the use frequency data when the abnormality occurs, can determine the use frequency for each predetermined display unit when the abnormality occurs, or can determine the use frequency for each predetermined display unit when the specific abnormality occurs. In addition, the use frequency data may include information indicating a state of the injection molding machine 10 when a target display unit is displayed. For example, the state of the injection molding machine 10 may include states during setup, during condition adjustment, and during mass production molding.

The optimized screen generation unit 7002 generates an optimum display screen (hereinafter, an "optimized screen") that conforms to a predetermined condition. For example, the optimized screen generation unit 7002 may generate an optimized screen that conforms to each of a plurality of users registered in advance. In addition, for example, the optimized screen generation unit 7002 may generate the optimized screen that conforms to a condition of the injection molding machine 10 (for example, the presence or absence of the abnormality). Details of the optimized screen will be described later.

The screen data storage unit 7003 stores data (hereinafter, "screen data") relating to the display screen that can be displayed on the display unit 760. For example, the screen data includes each image data of a plurality of screen elements that can be displayed on the display unit 760, or data relating to disposition of the screen elements in each of the plurality of display screens that can be displayed on the display unit 760. For example, the plurality of display screens that can be displayed on the display unit 760 include one or the plurality of display screens (hereinafter, "standard screens") prepared in advance during factory shipment (initial state) of the injection molding machine 10. In addition, for example, the plurality of display screens that can be displayed on the display unit 760 include the optimized screen generated by the optimized screen generation unit 7002. That is, the screen data of the optimized screen generated by the optimized screen generation unit 7002 is stored (registered) in the screen data storage unit 7003.

The screen editing unit 7004 edits contents of the display screen that can be displayed on the display unit 760, in accordance with a predetermined input operation of the user through the operation unit 750. Hereinafter, in some cases, the display screen edited and generated by the screen editing unit 7004 may be referred to as an editing screen. In this manner, the screen editing unit 7004 can generate the editing screen on which the plurality of screen elements that can be separately displayed are collected. In this manner, the user can prepare the editing screen on which the contents of the display screen that can be displayed on the display unit 760 are customized to satisfy a demand of the user, through the operation unit 750. For example, the screen editing unit 7004 may be configured to generate a new display screen in accordance with a predetermined input operation received by the operation unit 750, and to be capable of editing the contents of the screen elements included in the new display screen, or the disposition of the screen elements. In addition, the screen editing unit 7004 may be configured to be capable of editing such as changing the contents of the screen elements included in the existing display screen or changing the disposition of the screen elements. For example, the existing display screen includes the standard screen. In addition, for example, the existing display screen include the previously generated optimized screen or the editing screen.

The optimized link generation unit 7005 generates a shortcut link (hereinafter, an "optimized link") for displaying an optimum display screen that conforms to a predetermined condition. For example, the optimized link generation unit 7005 may generate an optimized link that conforms to each of a plurality of users registered in advance. In addition, the optimized link generation unit 7005 may generate the optimized link that conforms to a condition of the injection molding machine 10 (for example, the presence or absence of the abnormality) . Details of the optimized link will be described later.

The link data storage unit 7006 stores (registers) data relating to the optimized link generated by the optimized link generation unit 7005.

The screen display unit 7007 controls the display contents of the display unit 760. For example, in the screen display unit 7007, the display screen is displayed on the display unit 760. Specifically, the screen display unit 7007 may display the display screen such as the standard screen, the optimized screen, and the editing screen on the display unit 760. For example, the screen display unit 7007 may display the contents of the display screen by using a size that fits in a display region of the display unit 760. In addition, for example, the screen display unit 7007 may display the contents of the display screen by using a size that extends beyond the display region of the display unit 760. In this case, the screen display unit 7007 may scroll the contents of the standard screen displayed on the display unit 760 continuously or in a stepwise manner in accordance with a predetermined input operation from the user through the operation unit 750. In this manner, the user can confirm all of the contents of the display screen larger than the display region of the display unit 760. In addition, for example, the screen display unit 7007 may cause the display unit 760 to display an operation target (for example, an icon) indicating a shortcut link (for example, the optimized link) for displaying a predetermined display screen. The use frequency storage unit 7001 can update the use frequency data (for example, adding the record data), based on a control state of the display unit 760 by the screen display unit 7007.

The data output portion 7008 outputs (transmits) predetermined data to the outside of the injection molding machine 10. For example, the data output portion 7008 may transmit screen data relating to the optimized screen generated by the optimized screen generation unit 7002 to an output destination device 6. In addition, the data output portion 7008 may transmit the data relating to the optimized link generated by the optimized link generation unit 7005 to the output destination device 6.

The output destination device 6 is connected to the injection molding machine 10 (control unit 700) to be communicable through a predetermined communication line. For example, the predetermined communication line includes a local area network (LAN) inside a factory where the injection molding machine 10 is installed. The local area network may be configured to include a wired line, may be configured to include a wireless line, or may be configured to include both of these. In addition, for example, the predetermined communication line may include a wide area network (WAN) outside the factory. For example, the wide area network may include a mobile communication network having a base station as a terminal, a satellite communication network using a communication satellite, and an Internet network. In addition, for example, the predetermined communication line may include a short-range wireless communication line such as Wi-Fi or Bluetooth (registered trademark). For example, the output destination device 6 is a management device that manages an operating status of the injection molding machine 10. For example, the management device is a cloud server (center server) provided in a management center provided at a location relatively far from the factory where the injection molding machine 10 is installed. In addition, for example, the management device is an edge server inside a factory where the injection molding machine 10 is installed or in a place relatively close to the factory (for example, a base station or a station building of a telecommunications carrier close to the factory) . In addition, for example, the management device may be a terminal device installed inside the factory where the injection molding machine 10 is installed. For example, the terminal device may be a stationary terminal device such as a desktop computer terminal, or may be a mobile terminal such as a smartphone, a tablet terminal, and a laptop computer terminal.

### Details of Standard Screen

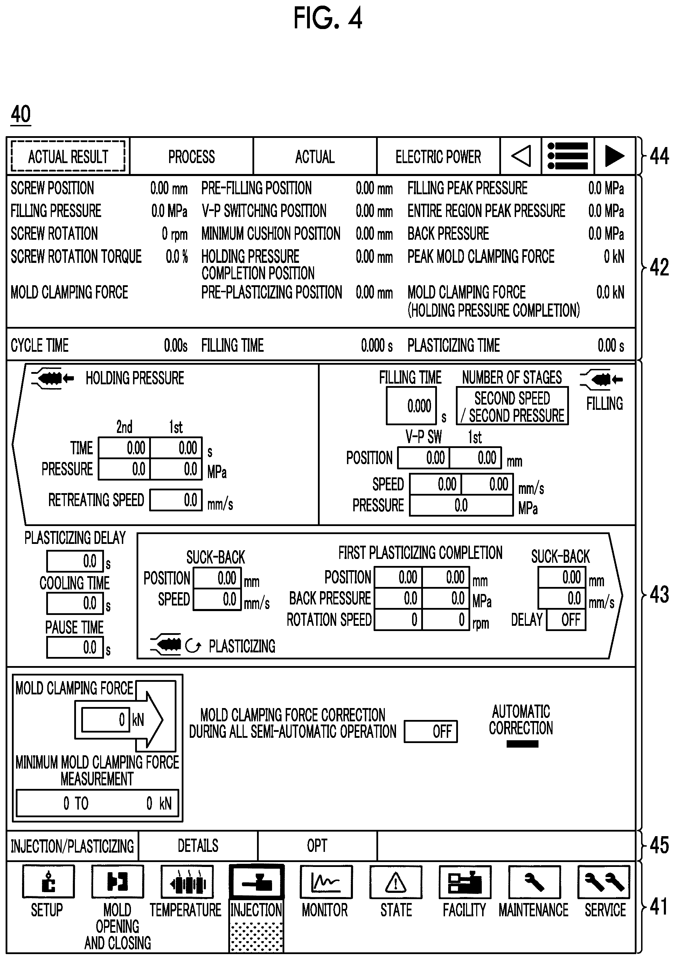

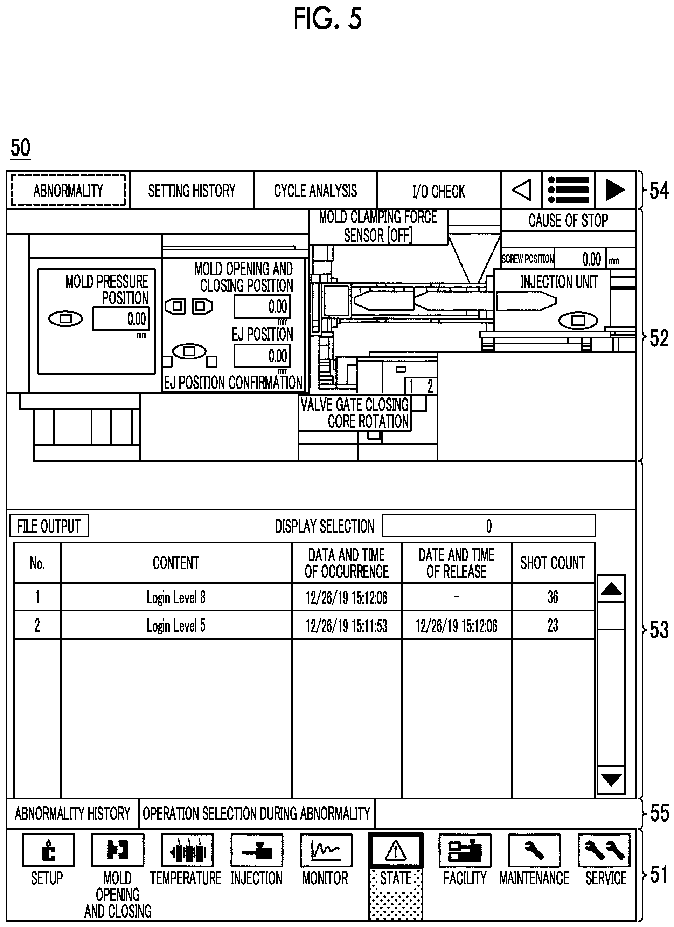

Next, a specific example of the standard screen displayed on the display unit 760 will be described with reference to FIGS. 4 and 5.

### Injection Setting Screen

FIG. 4 illustrates an example of the standard screen displayed on the display unit 760. Specifically, FIG. 4 is a view illustrating a standard screen (hereinafter, an "injection setting screen") 40 for setting the injection process of the injection molding machine 10. The injection setting screen 40 is displayed on the display unit 760 under the control of the screen display unit 7007.

As illustrated in FIG. 4, the injection setting screen 40 includes screen regions 41 to 45 divided in the vertical direction.

The screen region 41 is provided in a lower end portion of the display screen (injection setting screen 40). In the screen region 41, a plurality of (nine in this example) tabs for selecting the display screen to be displayed on the display unit 760 are laterally provided. In this example, each tab is used to allow the user to select the standard screen to be displayed on the display unit 760 from a plurality of (nine) standard screens.

For example, a left end tab ("setup") of the screen region 41 corresponds to a standard screen (hereinafter, a "setup setting screen") for setting the setup of the injection molding machine 10. In addition, for example, the second tab from the left ("mold opening and closing") of the screen region 41 corresponds to a standard screen (hereinafter, a "mold opening and closing setting screen") for setting the mold opening and closing process of the injection molding machine 10. In addition, for example, the third tab ("temperature") from the left of the screen region 41 corresponds to a standard screen (hereinafter, a "temperature setting screen") for setting a temperature of the injection unit 300 (cylinder 310) of the injection molding machine 10. In addition, for example, the fourth tab ("injection") from the left of the screen region 41 corresponds to the injection setting screen 40, and the tab is selected in this example. In this manner, the injection setting screen 40 is displayed on the display unit 760. In addition, for example, the fifth tab ("monitor") from the left of the screen region 41 corresponds to a standard screen (hereinafter, a "monitor screen") for allowing the user to monitor various actual result data (that is, detection data of various sensors) relating to an operation state of the injection molding machine 10. In addition, for example, the sixth tab ("state") from the left of the screen region 41 corresponds to a state monitoring screen 50 (to be described later). In addition, for example, the seventh tab ("facility") from the left of the screen region 41 corresponds to a standard screen for allowing the user to perform system settings of languages and display colors of the screen. In addition, for example, the eighth tab ("maintenance") from the left of the screen region 41 corresponds to a standard screen (hereinafter, a "maintenance information screen") for displaying information relating to maintenance of the injection molding machine 10 for the user to input a periodic inspection date. In addition, for example, the ninth (right end) tab ("service") from the left of the screen region 41 corresponds to a standard screen for parameter adjustment which can be used only by a user such as a serviceman who has a specific authority (service authority).

In this way, the user uses the operation unit 750 to select a desired tab provided in a lower end portion (in this example, the screen region 41) of the display screen. In this manner, a desired display screen (for example, the standard screen) can be displayed on the display unit 760. Therefore, for example, the user can display the standard screens (for example, the setup setting screen, the mold opening and closing setting screen, the temperature setting screen, the monitor screen, and the maintenance information screen) of a type other than the injection setting screen 40 or the state monitoring screen 50 (to be described later).

The screen region 42 is disposed slightly above the center of the display screen (injection setting screen 40) in the vertical direction. In the screen region 42, the screen element indicating predetermined information is displayed. For example, the screen region 42 displays the screen elements including information relating to the injection such as a screw position and a filling pressure, information relating to mold clamping such as a mold clamping force, and information relating to the entire process such as the cycle time.

The screen region 43 is disposed adjacent to a lower portion of the screen region 42 of the display screen (injection setting screen 40). The screen region 43 displays the screen element for performing settings relating to the injection process.

The screen region 44 is disposed adjacent to an upper portion of the screen region 42. In the screen region 44, a plurality of (four in this example) tabs (tabs displaying each character information of "actual result ", "process", "actual", and "electric power" for selecting screen element displayed on the screen region 42) are laterally provided. In this manner, the user can switch among the four screen elements in which the screen elements to be displayed on the screen region 42 are defined in advance. In this example, the left end tab ("actual result ") of the four tabs is selected, and the screen element indicating an actual value (detection value) of various parameters is displayed on the screen region 42. In addition, when the second tab ("process") from the left of the four tabs is selected, the current process and the actual value corresponding to the process are displayed.

The screen region 45 is disposed adjacent to a lower portion of the screen region 43. In the screen region 45, a plurality of (three in this example) tabs (tabs displaying each character information of "injection/plasticizing", "details", and "OPT") for selecting the screen elements displayed on the screen region 43 are on the right and left sides. In this manner, the user can switch among the three screen elements in which the screen elements to be displayed on the screen region 43 are defined in advance. In this example, the left end tab ("injection/plasticizing") of the three tabs is selected, and the screen region 43 displays the screen element indicating a setting item relating to a standard injection process.

### State Monitoring Screen

FIG. 5 is a view illustrating another example of the standard screen displayed on the display unit 760. Specifically, FIG. 5 is a view illustrating a standard screen (hereinafter, a "state monitoring screen") 50 relating to monitoring a state of the injection molding machine 10. The state monitoring screen 50 is displayed on the display unit 760 under the control of the screen display unit 7007.

As illustrated in FIG. 5, the state monitoring screen 50 includes screen regions 51 to 55 divided in the vertical direction.

The screen region 51 is provided in a lower end portion of the display screen (state monitoring screen 50). In the screen region 51, a plurality of (nine in this example) tabs for selecting the display screen to be displayed on the display unit 760 are laterally provided. In this example, as in the case of the screen region 41 of the injection setting screen 40 illustrated in FIG. 4, each tab is used for the user to select the standard screen to be displayed on the display unit 760 from the plurality of (nine) standard screens. Out of the plurality of tabs, the sixth tab ("state") from the left end corresponds to the state monitoring screen 50 as described above, and since tab is selected, the state monitoring screen 50 is displayed on the display unit 760.

The screen region 52 is disposed slightly above the center of the display screen (state monitoring screen 50) in the vertical direction.

The screen region 53 is disposed adjacent to a lower portion of the screen region 52 of the display screen (state monitoring screen 50).

The screen region 54 is disposed adjacent to an upper portion of the screen region 52. In the screen region 54, a plurality of (four in this example) tabs (tabs displaying each character information of "abnormality ", "setting history", "cycle analysis", and "I/O check") for selecting the screen element to be displayed on the screen region 52 are laterally provided. In this manner, the user can switch among the four screen elements in which the screen elements to be displayed on the screen region 52 are defined in advance. In this example, the left end tab ("abnormality") of the four tabs is selected, and the screen region 52 displays the screen elements indicating the actual value of various parameters and the presence or absence of abnormality for each of a plurality of units (the mold clamping unit 100, the ejector unit 200, and the injection unit 300) of the injection molding machine 10.

The screen region 55 is disposed adjacent to a lower portion of the screen region 53. In the screen region 55, a plurality of (two in this example) tabs (tabs displaying each character information of ("abnormality history" and "operation selection during abnormality") for selecting the screen element to be displayed on the screen region 53 are laterally provided. In this manner, the user can switch between the two screen elements in which the screen elements to be displayed on the screen region 53 are defined in advance. In this example, the left end tab ("abnormality history") of the two tabs is selected, and the screen region 53 displays the screen element indicating history information relating to the abnormality which has occurred. Specifically, the screen region 53 displays abnormality contents (in this example, login in a predetermined authorization level), the date of abnormality occurrence, the date and time of abnormality release, and the number of shots when the abnormality occurs. In the present example, in the top abnormality history, the date and time of abnormality release is not displayed, and indicates the abnormality is not yet released (login is continued). In addition, when the right end tab ("operation selection during abnormality") of the two tabs is selected, the screen element is displayed for the user to set and input a type of the abnormality an operation to be performed by the injection molding machine 10 when the abnormality occurs.

### Details of Optimized Screen

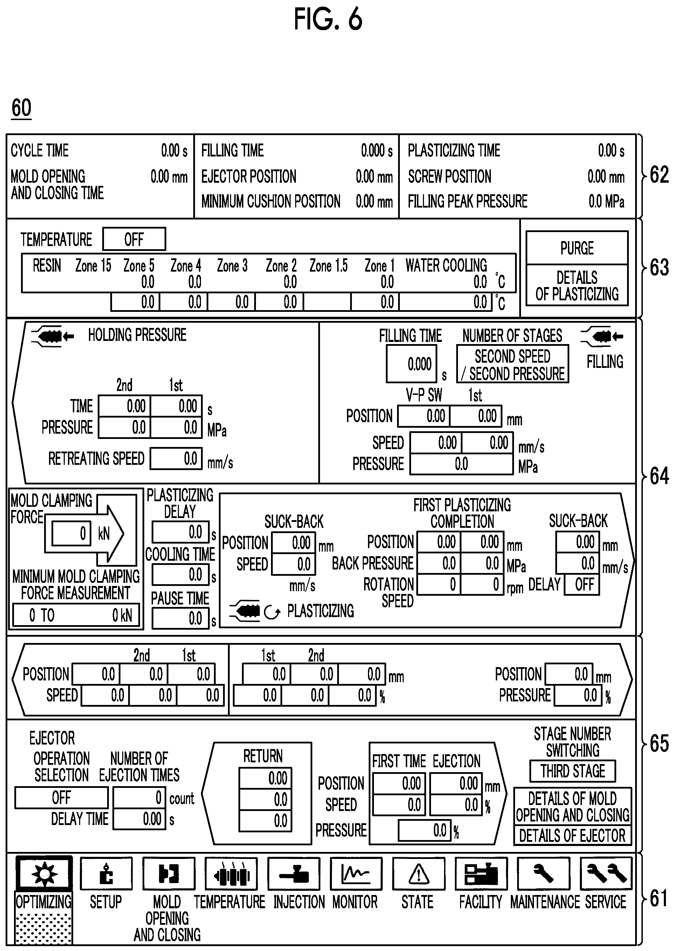

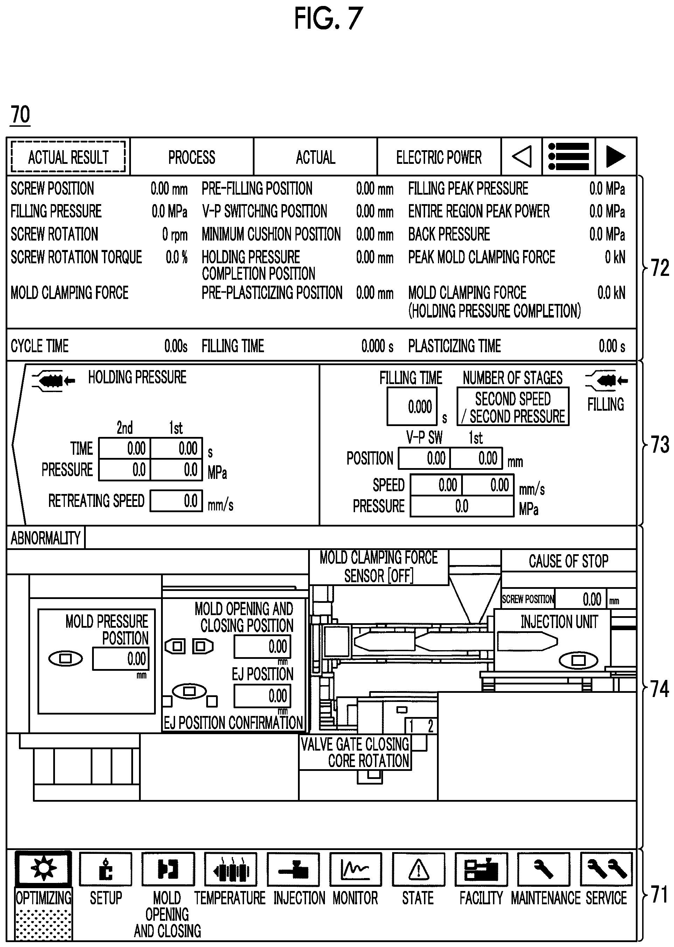

Next, details of the optimized screen displayed on the display unit 760 will be described with reference to FIGS. 6 and 7.

### Example of Optimized Screen

In this example, the optimized screen generation unit 7002 generates the optimized screen that conforms to each of a plurality of users registered in advance.

For example, for each of a plurality of users, the optimized screen generation unit 7002 may generate the optimized screen that conforms to the standard screen of the user or the operation condition (use frequency) of the screen elements included in the standard screen. Specifically, the optimized screen generation unit 7002 may generate the optimized screen including a plurality of screen elements in which the use frequency of the target user is relatively high out of the screen elements that can be displayed on a plurality of standard screens . The screen display unit 7007 may display the optimized screen corresponding to the user in use on the display unit 760. For example, when the injection molding machine 10 starts startup (for example, when power is turned on), in a case where an input of a user ID and the corresponding legitimate password are requested through a login screen displayed on the display unit 760 and authentication is successful, a mode may be adopted so that the user is permitted to perform an operation such as settings relating to the injection molding machine 10. In this case, the screen display unit 7007 can identify the user in use, based on the user ID which is successful in the authentication. In addition, the screen display unit 7007 may identify the user in use by using face authentication or iris authentication, based on image data of a camera installed so that the user who uses the display unit 760 of the injection molding machine 10 can be imaged.

For example, FIG. 6 is a view illustrating an example of the optimized screen displayed on the display unit 760. Specifically, FIG. 6 is a view illustrating an optimized screen 60 generated for a user who has a relatively high frequency of setting molding conditions of the injection molding machine 10 and displayed on the display unit 760.

As illustrated in FIG. 6, the optimized screen 60 includes screen regions 61 to 65 divided in the vertical direction.

The screen region 61 is provided in a lower end portion of the display screen (optimized screen 60). As in the case of the screen region 41 of the injection setting screen 40 and the screen region 51 of the state monitoring screen 50 which are described above, in the screen region 61, a plurality of (10 in this example) tabs for selecting the display screen to be displayed on the display unit 760 are laterally provided. In this example, unlike the case of the screen region 41 of the injection setting screen 40 and the screen region 51 of the state monitoring screen 50 which are described above, a tab ("optimizing") for displaying the optimized screen is added to the left end of the nine tabs for displaying each of the nine standard screens on the display unit 760. For example, a function of displaying the optimized screen on the display unit 760 may be enabled or disabled in accordance with a predetermined operation through the operation unit 750. FIGS. 4 and 5 may correspond to a state where the function is disabled, and FIG. 6 may correspond to a state where the function is enabled. In this manner, the user can select the left end tab through the operation unit 750, and can display the optimized screen 60 on the display unit 760.

The screen region 62 is provided in an upper end portion of the optimized screen 60. The screen region 62 displays the screen element indicating an actual value (detection value) of various parameters of the injection molding machine 10. The screen element corresponds to a portion of the screen element displayed on the screen region 42 of the injection setting screen 40 corresponding to the fifth tab ("injection") from the left end of the screen region 61 (refer to FIG. 4). Specifically, the screen region 62 displays the actual value of various parameters relating to all processes during a cycle time, a mold opening and closing time, a filling time, and a plasticizing time, the mold opening and closing, the injection, and the plasticizing. In addition, the screen region 62 may display contents corresponding to all of the screen elements displayed on the screen region 42 of the injection setting screen 40. When the molding conditions are set, there is a possibility that the user who relatively frequently sets the molding conditions may more frequently confirm the actual value of various parameters, and there is a possibility that the screen element displayed on the screen region 44 of the injection setting screen 40 may be relatively more frequently used.

The screen region 63 is provided adjacent to a lower portion of the screen region 62 of the optimized screen 60. The screen region 63 displays the screen element for setting a temperature of the injection unit 300 (cylinder 310) of the injection molding machine 10. The screen element corresponds to a portion of the screen element that can be displayed on a temperature setting screen corresponding to the fourth tab ("temperature") from the left end of the screen region 61. In addition, the screen region 63 may display contents corresponding to all of the screen elements that can be displayed on the temperature setting screen. There is a high possibility that the user who relatively frequently sets the molding conditions may relatively frequently set the temperature.

The screen region 64 is provided adjacent to a lower portion of the screen region 63 of the optimized screen 60. In the screen region 64, screen elements for making settings relating to the injection process are displayed. This screen element corresponds to a portion of the screen element that can be displayed on the screen region 43 of the injection setting screen 40 (refer to FIG. 4). In addition, the screen region 64 may display contents corresponding to all of the screen elements that can be displayed on the screen region 43 of the injection setting screen 40. There is a high possibility that the user who relatively frequently sets the molding conditions may relatively frequently perform setting relating to the injection process.

The screen region 65 is provided adjacent to a lower portion of the screen region 64 and an upper portion of the screen region 61 of the optimized screen 60. The screen region 65 displays the screen element for performing settings relating to the mold opening and closing process of the injection molding machine 10. The screen element corresponds to a portion of the screen element that can be displayed on the mold opening and closing setting screen corresponding to the third tab ("mold opening and closing") from the left end of the screen region 61. In addition, the screen region 65 may display contents corresponding to all of the screen elements that can be displayed on the mold opening and closing setting screen. There is a high possibility that the user who relatively frequently sets the molding conditions may relatively frequently perform setting relating to the mold opening and closing.

The number of the screen elements included in the optimized screen 60 is four. However, the number may be three or less, or five or more.

In this example, the optimized screen generation unit 7002 compares the use frequencies of the respective screen elements that can be displayed on the display unit 760 by a specific user who relatively frequently sets the molding conditions, and generates the optimized screen 60 including four screen elements which are most frequently used out of the screen elements. In a case where the specific user uses the display unit 760, when the left end tab ("optimizing") of the screen region 61 is selected, the screen display unit 7007 displays the optimized screen 60 to conform to the user. In this manner, the specific user who relatively frequently sets the molding conditions, the user does not need to set the molding conditions while switching between a plurality of standard screens. Therefore, convenience of the user can be improved.

In addition, for example, there is a possibility that a user who checks a molding product during mass production may relatively more frequently use the screen element for causing the user to monitor various actual result data relating to an operation state of the injection molding machine 10, that is, the screen element that can be displayed on a monitor screen. Therefore, the optimized screen generation unit 7002 may generate the optimized screen partially or entirely including the screen elements that can be displayed on the monitor screen, which are relatively frequently used by the specific user who carries out work for checking the molding product. In a case where the specific user uses the display unit 760, when the left end tab ("optimizing") in a lower end portion of the display screen is selected, the screen display unit 7007 may display the optimized screen that conforms to the user. In this manner, for example, the specific user who carries out the work for checking the molding product during mass production does not need to confirm desired information including various actual result data relating to the operation state while switching between a plurality of standard screens. Therefore, convenience of the user can be improved.

In addition, for example, there is a possibility that the user who carries out maintenance work of the injection molding machine 10 may relatively more frequently use the screen element indicating information relating to the maintenance of the injection molding machine 10, that is, the screen element that can be displayed on the maintenance information screen. In addition, there is a possibility that the user who carries out the maintenance work of the injection molding machine 10 may relatively more frequently use the screen element indicating information relating to the abnormality occurrence of the injection molding machine 10, that is, the screen element that can be displayed on the state monitoring screen 50. Therefore, the optimized screen generation unit 7002 may generate the optimized screen partially or entirely including the screen element on a maintenance information screen or the screen element that can be displayed on the state monitoring screen 50, which are relatively frequently used by the specific user who carries out maintenance work for the injection molding machine 10. In a case where the specific user uses the display unit 760, when the left end tab ("optimizing") in a lower end portion of the display screen is selected, the screen display unit 7007 may display the optimized screen that conforms to the user. In this manner, for example, the user who carries out maintenance work for the injection molding machine 10 does not need to confirm information required for the maintenance work while switching between a plurality of standard screens. Therefore, convenience of the user can be improved.

In addition, in the optimized screen, the included screen elements may be partially or entirely updated in accordance with a change in the use frequency of each user. For example, in some cases, work contents of the same user may be changed.

In addition, the optimized screen may be prepared in advance for each of a plurality of previously defined user categories, regardless of the actual result of the use frequency. For example, the screen element which is relatively more frequently used can be inferred from work characteristics of the user corresponding to each of the plurality of user categories. For example, the plurality of user categories may include the user category corresponding to the user who sets the molding conditions of the injection molding machine 10, the user category corresponding to the user who checks the molding product during the mass production, and the user category corresponding to the user who carries out the maintenance work for the injection molding machine 10. In this manner, the optimized screen which is the same as that described above can be prepared in advance to conform to the user in each user category.

In addition, the screen data relating to the optimized screen generated to conform to each user may be output (transmitted) to the output destination device 6 by the data output portion 7008. In this manner, for example, the optimized screen generated by one injection molding machine 10 can be shared with another injection molding machine 10 through the output destination device 6. Therefore, when the same user uses the display unit 760 of one injection molding machine 10, it is possible to display the optimized screen generated by the other injection molding machine 10. Therefore, the convenience of the user can be further improved.

In addition, the number of the optimized screens generated to satisfy each user or prepared to conform to each user category may be two or more. For example, a configuration may be adopted to generate or prepare a first optimized screen including a plurality of screen elements (group) which are most frequently used, and a second optimized screen including a plurality of screen elements (group) which are more frequently used subsequent to the screen element of the first optimized screen. In this case, the screen display unit 7007 may selectively display one optimized screen out of the plurality of optimized screens, in accordance with a predetermined input operation from the user through the operation unit 750. In this manner, the user can select the optimized screen to be displayed on the display unit 760 from the plurality of optimized screens by using the operation unit 750. Hereinafter, the same may apply to a case of another example to be described later.

### Another Example of Optimized Screen

In this example, the optimized screen generation unit 7002 generates the optimized screen which conforms to various states of the injection molding machine 10.

For example, the optimized screen generation unit 7002 may generate the optimized screen which conforms to a plurality of previously defined states when the abnormality occurs in the injection molding machine 10, or when a molding defect occurs. Specifically, the optimized screen generation unit 7002 may generate the optimized screen including a plurality of screen elements which are relatively more frequently used in a target state, out of the screen elements that can be displayed on the plurality of standard screens. The screen display unit 7007 may causes the display unit 760 to display the optimized screen corresponding to a current state of the injection molding machine 10. For example, when the abnormality occurs in the injection molding machine 10, the screen display unit 7007 causes the display unit 760 to display the optimized screen corresponding to the abnormal state. In addition, for example, when the molding defect occurs in the injection molding machine 10, the screen display unit 7007 causes the display unit 760 to display the optimized screen corresponding to the state where the molding defect occurs.

For example, FIG. 7 is a view illustrating another example of the optimized screen displayed on the display unit 760. Specifically, FIG. 7 is a view illustrating an optimized screen 70 displayed on the display unit 760 when the abnormality occurs in the injection molding machine 10.

As illustrated in FIG. 7, the optimized screen 70 includes screen regions 71 to 74 divided in the vertical direction.

The screen region 71 is provided in a lower end portion of the display screen (optimized screen 70). As in the case of the optimized screen 60 described above, in the screen region 71, a plurality of (10 in this example) tabs for selecting the display screen to be displayed on the display unit 760 are laterally provided. Specifically, the tab ("optimizing") for displaying the optimized screen is added to the left end of the nine tabs for displaying each of the nine standard screens on the display unit 760. That is, FIG. 7 corresponds to a state where the function of displaying the optimized screen on the display unit 760 is enabled. In this manner, as in the case of the optimized screen 60 described above, the user can select the left end tab through the operation unit 750, and can display the optimized screen 70 on the display unit 760.

The screen region 72 is provided in an upper end portion of the optimized screen 70. The screen region 72 displays the screen element indicating the actual value (detection value) of various parameters of the injection molding machine 10. The screen element corresponds to a portion of the screen elements that can be displayed on the screen region 42 of the injection setting screen 40 corresponding to the fifth tab ("injection") from the left end of the screen region 71 (refer to FIG. 4). Specifically, the screen region 72 displays various parameters including the parameter relating to the injection such as a screw position and a filling pressure, the parameter relating to the mold clamping such as the mold clamping force, and the parameter relating to all processes such as the cycle time. In addition, the screen region 72 may display contents corresponding to all of the screen elements that can be displayed on the screen region 42 of the injection setting screen 40. When the abnormality occurs, there is a high possibility that the user may check a state of various parameters.

The screen region 73 is provided adjacent to a lower portion of the screen region 72 of the optimized screen 70. The screen region 73 displays the screen element for performing settings relating to the injection process. The screen element corresponds to a portion of the screen elements that can be displayed on the screen region 43 of the injection setting screen 40 corresponding to the fifth tab ("injection") from the left end of the screen region 71. In addition, the screen region 73 may display contents corresponding to all of the screen elements that can be displayed on the screen region 43 of the injection setting screen 40. When the abnormality occurs, there is high possibility that the user may confirm the contents of the settings relating to a location where the abnormality occurs.

The screen region 74 is provided adjacent to a lower portion of the screen region 73 of the optimized screen 70. The screen region 74 displays the screen element indicating the presence or absence of the abnormality in each of a plurality of locations of the injection molding machine 10. The screen element corresponds to all of the screen elements that can be displayed on the screen region 52 of the state monitoring screen 50 corresponding to the seventh tab ("state") from the left end of the screen region 71 (refer to FIG. 5). In addition, the screen region 74 may display contents corresponding to a portion of the screen elements that can be displayed on the screen region 52 of the state monitoring screen 50. When the abnormality occurs, there is a high possibility that the user may confirm which location has the abnormality.

The number of the screen elements included in the optimized screen 70 is three. However, the number may be two or less, or four or more.

In this example, the optimized screen generation unit 7002 compares the use frequencies of the respective screen elements that can be displayed on the display unit 760 when the abnormality occurs, and generates the optimized screen 70 including the three screen elements that are most frequently used out of the screen elements. In a case where the abnormality occurs, when the left end tab ("optimizing") in the screen region 71 is selected, the screen display unit 7007 causes the, display unit 760 to display the optimized screen 70 generated to conform to the user when the abnormality occurs. In this manner, the user does not need to confirm information relating to the occurrence of the abnormality while switching between a plurality of standard screens. Therefore, the convenience of the user can be improved.

Similarly, the optimized screen generation unit 7002 may compare the use frequencies of the respective screen elements that can be displayed on the display unit 760 when a molding defect occurs, and may generate the optimized screen including a predetermined number of (for example, three as in the case illustrated in FIG. 7) the screen elements which are most frequently used out of the screen elements. In a case where the molding defect occurs, when the left end tab ("optimizing") of the screen region in a lower end portion of the display screen is selected, the screen display unit 7007 may cause the display unit 760 to display the optimized screen generated in accordance with the occurrence of the molding defect. In this manner, the user does not need to confirm information relating to the molding defect which has occurred while switching between a plurality of standard screens. Therefore, the convenience of the user can be improved.

In addition, for each type of the abnormality defined in advance, the optimized screen generation unit 7002 may generate the optimized screen which conforms to the type of abnormality. In this case, for each of a plurality of types of abnormalities defined in advance, the optimized screen generation unit 7002 may compare the use frequencies of the respective screen elements that can be displayed on the display unit 760 when a target abnormality occurs, and may generate the optimized screen including a predetermined number of (for example, three) the which are most frequently used out of the screen elements. When one type of the abnormality out of the plurality of types of abnormality occurs, the screen display unit 7007 may cause the display unit 760 to display the optimized screen generated to conform to the type of the abnormality which has occurred. In this manner, the user can quickly confirm information which conforms to the type of the abnormality which has occurred. Therefore, the convenience of the user can be further improved.

Similarly, for each type of the molding defect defined in advance, the optimized screen generation unit 7002 may generate the optimized screen which conforms to the type of the molding defect. When one type of the molding defect occurs out of a plurality of types of the molding defects, the screen display unit 7007 may cause the display unit 760 to display the optimized screen generated to conform to the type of the molding defect which has occurred. In this manner, the user can quickly confirm the information which conforms to the type of the molding defect which has occurred. Therefore, the convenience of the user can be further improved.

In addition, in the optimized screen, the included screen elements may be partially or entirely updated to conform to a change in the use frequency of each screen element when the abnormality occurs or when the molding defect occurs. For example, depending on the user in use, items to be confirmed may be changed when the abnormality occurs or when the molding defect occurs.

In addition, without depending on an actual result of the use frequency, the optimized screen may be prepared in advance for each previously defined state classification of the injection molding machine 10 (hereinafter, "state classification") such as an occurrence state of the abnormality or an occurrence state of the molding defect. The state classification includes a classification corresponding to each type of the abnormality when a plurality of types of the abnormality are defined in advance as targets. Similarly, the state classification includes a classification corresponding to each type of the molding defect when a plurality of types of the molding defect are defined in advance as targets. For example, there is a high possibility that the user may confirm the information in view of characteristics of a target abnormality or a target molding defect, that is, it is possible to infer the screen elements which are relatively frequently used. In addition, for example, the state classification includes a state classification during setup of the injection molding machine 10, during adjustment of molding conditions, and during mass production molding. In this manner, the optimized screen the same as that described above can be prepared in advance to conform to the state of the injection molding machine 10 corresponding to each state classification.

In addition, screen data relating to the optimized screen generated to conform to the state of the injection molding machine 10 may be output (transmitted) to the output destination device 6 by the data output portion 7008. In this manner, for example, the optimized screen generated by one injection molding machine 10 can be shared with another injection molding machine 10 through the output destination device 6. Therefore, when a state (for example, the abnormality) corresponding to the optimized screen shared by the other injection molding machine 10 occurs, the optimized screen generated by one injection molding machine 10 can be displayed. Therefore, the convenience of the user can be further improved.

### Details of Optimized Link

Next, details of an optimized link displayed on the display unit 760 will be described.

### Example of Optimized Link

In this example, as in the case of the above-described optimized screen, the optimized link generation unit 7005 generates the optimized link which conforms to each of a plurality of users registered in advance.

For example, the optimized link generation unit 7005 may generate the optimized link indicating a shortcut link to the standard screen including the screen elements which are relatively frequently used by each user. The screen display unit 7007 may cause the display unit 760 to display an operation target (for example, a pop-up icon) indicating the optimized link corresponding to the user in use. For example, the screen display unit 7007 may display the operation target such as the pop-up icon indicating the optimized link in a lower end portion of the display region of the display unit 760. Hereinafter, the same may apply to a case of another example to be described later. In this manner, the user can easily access the standard screen including the screen elements which are frequently used by the user, simply by operating the operation target indicating the optimized link through the operation unit 750. Therefore, the convenience of the user can be improved. The number of the operation targets such as the pop-up icon indicating the optimized link displayed on the display unit 760 may be one or more. Hereinafter, the same may apply to a case of another example to be described later. In addition, the operation target indicating the optimized link may be displayed on the display unit 760 simultaneously with the display screen, or may be displayed on the display unit 760 in a state where the display screen is not displayed. Hereinafter, the same may apply to a case of another example to be described later.

In addition, as in the case of the optimized screen described above, the optimized link may be updated to conform to a change in the use frequency of each user. For example, in some cases, work contents of the same user may be changed.

In addition, as in the case of the optimized screen described above, without depending on the actual result of the use frequency, the optimized link may be prepared in advance for each of a plurality of user categories defined in advance. In this manner, the optimized link can be prepared in advance to conform to the user in each user category.

In addition, data relating to the optimized link generated to conform to each user may be output (transmitted) to the output destination device 6 by the data output portion 7008. In this manner, for example, the optimized link generated by one injection molding machine 10 can be shared with the other injection molding machine 10 through the output destination device 6. Therefore, when the same user uses the display unit 760 of the other injection molding machine 10, it is possible to display the operation target corresponding to optimize link generated by one injection molding machine 10. Therefore, the convenience of the user can be further improved.

### Another Example of Optimized Link

In this example, as in the case of the optimized screen described above, the optimized link generation unit 7005 generates the optimized link which conforms to various states of the injection molding machine 10.

The optimized link generation unit 7005 may generate the optimized link which conforms to a plurality of previously defined states when the abnormality occurs in the injection molding machine 10 or when the molding defect occurs. Specifically, the optimized link generation unit 7005 may generate the optimized link for the standard screen including the screen elements which are relatively frequently used in a target state out of the screen elements that can be displayed on the plurality of standard screens. The screen display unit 7007 may cause the display unit 760 to display the optimized link corresponding to a current state of the injection molding machine 10. For example, when the abnormality occurs in the injection molding machine 10, the screen display unit 7007 causes the display unit 760 to display the optimized link corresponding to the abnormal state. In addition, for example, when the molding defect occurs in the injection molding machine 10, the screen display unit 7007 causes the display unit 760 to display the optimized link corresponding to the occurrence state of the molding defect. In this manner, the user can easily access the standard screen including the screen elements which are frequently used by the user in the current state (for example, a state where an abnormality has occurred or a state where a molding defect occurs) of the injection molding machine 10, simply by operating the operation target indicating the optimized link through the operation unit 750. Therefore, the convenience of the user can be improved.

In addition, as in the case of the optimized screen described above, for each type of the abnormality defined in advance, the optimized link generation unit 7005 may generate the optimized link which conforms to the type of abnormality. When one type of the abnormality occurs out of a plurality of types of the abnormality, the screen display unit 7007 may display the operation target indicating the optimized link generated to conform to the type of the abnormality which has occurred. In this manner, the user can quickly confirm information which conforms to the type of the abnormality which has occurred. Therefore, the convenience of the user can be further improved.

Similarly, for each type of the molding defect defined in advance, the optimized link generation unit 7005 may generate the optimized link which conforms to the type of the molding defect. When one type of the molding defect occurs out of a plurality of types of the molding defects, the screen display unit 7007 may cause the display unit 760 to display the operation target indicating the optimized link generated to conform to the type of the molding defect which has occurred. In this manner, the user can quickly confirm the information which conforms to the type of the molding defect which has occurred. Therefore, the convenience of the user can be further improved.

In addition, as in the case of the optimized screen described above, the optimized link may be updated to conform to a change in the use frequency of each screen element when the abnormality occurs or when the molding defect occurs. For example, depending on the user in use, items to be confirmed may be changed when the abnormality occurs or when the molding defect occurs.

In addition, as in the case of the optimized screen described above, without depending on the actual result of the use frequency, the optimized link may be prepared in advance for each previously defined classification state (hereinafter, "state classification") of the injection molding machine 10, such as an occurrence state of the abnormality and an occurrence state of the molding defect. For example, there is a high possibility that the user may confirm the information in view of characteristics of a target abnormality or a target molding defect, that is, it is possible to infer the screen elements which are relatively frequently used. In this manner, the optimized link can be prepared in advance to conform to the state of the injection molding machine 10 corresponding to each state classification.

In addition, the data relating to the optimized link generated to conform to the state of the injection molding machine 10 may be output (transmitted) to the output destination device 6 by the data output portion 7008. In this manner, for example, the optimized link generated by one injection molding machine 10 can be shared with the other injection molding machine 10 through the output destination device 6. Therefore, when a state (for example, the abnormality) corresponding to the optimized screen shared by the other injection molding machine 10 occurs, the optimized screen generated by one injection molding machine 10 can be displayed. Therefore, the convenience of the user can be further improved.

### Operation

Next, an operation of the injection molding machine 10 according to the present embodiment will be described.

In the present embodiment, the display unit 760 displays the display screen (for example, the optimized screen or the editing screen) in which a plurality of screen elements that can be separately displayed are collected.

In this manner, the injection molding machine 10 can cause the display unit 760 to display the display screen which conforms to a use status of the display screen of the user, a status of the injection molding machine 10, or a preference of the user. Therefore, the injection molding machine 10 can improve the convenience of the user who uses the display unit 760.

In addition, in the present embodiment, the display unit 760 may display the display screen on which the plurality of screen elements included in each of the plurality of standard screens prepared in an initial state are collected.

In this manner, the injection molding machine 10 can cause the display unit 760 to display the display screen on which the components that can be separately displayed are collected, by using the screen elements included in the standard screen prepared in advance.

In addition, in the present embodiment, the display unit 760 may display the optimized screen on which the plurality of components that are relatively frequently used out of the displayable screen elements are collected.

In this manner, the injection molding machine 10 can cause the display unit 760 to display the display screen (optimized screen) which conforms to the use status of the display screen of the user.

In addition, in the present embodiment, in the optimized screen, the plurality of components may be partially or entirely updated to satisfy a change in the use frequency.

In this manner, the injection molding machine 10 can update the optimized screen to conform to a change in the use status of the display screen of the user. Therefore, the injection molding machine 10 can further improve the convenience of the user who uses the display unit 760.

In addition, in the present embodiment, the display unit 760 may display the optimized screen which conforms to the user in use.

In this manner, the injection molding machine 10 can cause the display unit 760 to display the optimized screen which conforms to each of the plurality of users registered in advance.

In addition, in the present embodiment, the display unit 760 may display the optimized screen which conforms to the user category corresponding to the user in use out of the plurality of user categories.

In this manner, for example, user for each of the plurality of user categories, the injection molding machine 10 can cause the display unit 760 to display the optimized screen which conforms to use characteristics of the display screen of the user.

In addition, in the present embodiment, the display unit 760 may display the plurality of optimized screens that can be selectively displayed.

In this manner, the injection molding machine 10 can cause the display unit 760 to display more screen elements through the plurality of optimized screens, in view of the convenience of the user. Therefore, the convenience of the user can be further improved.

In addition, in the present embodiment, the display unit 760 may display the optimized screen that can scroll and display the plurality of components.

In this manner, the injection molding machine 10 can cause the display unit 760 to display more screen elements through the scrollable optimized screen, in view of the convenience of the user. Therefore, the convenience of the user can be further improved.

### Modification and Change

Hitherto, the embodiments have been described. However, the present invention is not limited to the above-described embodiments. Various modifications and changes can be made within the scope of the concept described in the appended claims.

For example, in the embodiment described above, a method of displaying the screen (optimized screen) on the display unit 760 by adopting the injection molding machine 10 as a target has been described. However, the same method of displaying the screen by adopting other industrial machines as the target may be applicable to the present invention. For example, other industrial machines include stationary machines installed in factories, such as machine tools and production robots. In addition, for example, other industrial machines include mobile work machines. For example, the mobile work machines include construction machines such as excavators and bulldozers, agricultural machines such as combine harvesters, and transport machines such as mobile cranes.

### Brief Description of the Reference Symbols

- 10:: injection molding machine (industrial machine)
- 100:: mold clamping unit
- 200:: ejector unit
- 300:: injection unit
- 400:: moving unit
- 700:: control unit
- 701:: CPU
- 702:: storage medium
- 703:: input interface
- 704:: output interface
- 750:: operation unit
- 760:: display unit
- 800:: mold unit
- 7001:: use frequency storage unit
- 7002:: optimized screen generation unit
- 7003:: screen data storage unit
- 7004:: screen editing unit
- 7005:: optimized link generation unit
- 7006:: link data storage unit
- 7007:: screen display unit
- 7008:: data output portion

## Claims

1. An injection molding machine (10) comprising:
a display unit (760) that displays an editing screen (60, 70) on which a plurality of separately displayable components are collected.

2. The injection molding machine (10) according to claim 1,
wherein the display unit (760) displays the editing screen (60, 70) on which the plurality of components included in each of a plurality of standard screens prepared in an initial state are collected.

3. The injection molding machine (10) according to claim 1 or 2,
wherein the display unit (760) displays the editing screen (60, 70) on which the plurality of components having a relatively high use frequency out of the displayable components are collected.

4. The injection molding machine (10) according to claim 3,
wherein in the editing screen (60, 70), the plurality of components are partially or entirely updated in accordance with a change in the use frequency.

5. The injection molding machine (10) according to any one of claims 1 to 4,
wherein the display unit (760) displays the editing screen (60, 70) which conforms to a user in use.

6. The injection molding machine (10) to claim 4,
wherein the display unit (760) displays the editing screen (60, 70) which conforms to a user category corresponding to a user in use out of a plurality of the user categories.

7. The injection molding machine (10) according to any one of claims 1 to 6,
wherein the display unit (760) displays a plurality of the editing screens (60, 70) which are selectively displayable.

8. The injection molding machine (10) according to any one of claims 1 to 7,
wherein the display unit (760) displays the editing screen (60, 70) capable of scrolling and displaying the plurality of components.

9. An industrial machine (10) comprising:
a display unit (760) that displays an editing screen (60, 70) on which a plurality of separately displayable components are collected.
